(19) **Europäisches Patentamt European Patent Office Office européen des brevets**

(11) **EP 4 582 477 A1**

(12) **EUROPEAN PATENT APPLICATION**
published in accordance with Art. 153(4) EPC

(43) Date of publication:
09.07.2025 Bulletin 2025/28

(21) Application number: 23860195.9

(22) Date of filing: 25.08.2023

(51) International Patent Classification (IPC):
$C08L\ 23/00^{(2006.01)}$  $B01D\ 39/14^{(2006.01)}$
$B01D\ 39/16^{(2006.01)}$  $B03C\ 3/28^{(2006.01)}$
$D01F\ 6/04^{(2006.01)}$  $D04H\ 3/007^{(2012.01)}$
$D04H\ 3/16^{(2006.01)}$

(52) Cooperative Patent Classification (CPC):
B01D 39/14; B01D 39/16; B03C 3/28; C08L 23/00;
D01F 6/04; D04H 3/007; D04H 3/16

(86) International application number:
PCT/JP2023/030656

(87) International publication number:
WO 2024/048433 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.08.2022 JP 2022138525
31.08.2022 JP 2022138526
31.08.2022 JP 2022138527

(71) Applicant: TOYOBO MC Corporation
Osaka 530-0001 (JP)

(72) Inventors:
• HIRASE, Akira
Otsu-shi, Shiga 520-0292 (JP)
• KITAGAWA, Yoshiyuki
Otsu-shi, Shiga 520-0292 (JP)

(74) Representative: Vossius & Partner
Patentanwälte Rechtsanwälte mbB
Siebertstrasse 3
81675 München (DE)

(54) **POLYETHYLENE RESIN COMPOSITION, MELT-BLOWN NON-WOVEN FABRIC USING POLYETHYLENE RESIN, AND ELECTRET MATERIAL**

(57)     An object of the present invention is to provide a resin composition that can achieve high productivity and a low environmental impact. The resin composition of the present invention includes a polyethylene resin, a polypropylene resin, and a compatibilizer, in which the polyethylene resin contains a plant-derived polyethylene resin.

**Description**

TECHNICAL FIELD

The present invention relates to a polyethylene resin composition, specifically, a meltblown nonwoven fabric formed from the polyethylene resin composition, an electret material, and a method for producing the electret material.

BACKGROUND ART

Nonwoven fabrics made of polyethylene fibers are known for their flexibility and excellent texture. However, spinning polyethylene fibers by a meltblown method is generally difficult, and increasing the spinning temperature is necessary to reduce the fiber diameter, but this results in gelation caused by a cross-linking reaction of the molten polyethylene. For these reasons, conventional polyethylene meltblown nonwoven fabrics had the problem of resulting in large fiber diameters and poor quality.

To solve the above problems, the production of fibers with fine fiber diameters and meltblown nonwoven fabrics made therefrom has been attempted by using, a lower-molecular-weight polyethylene, such as polyethylene wax alone, rather than general-purpose polyethylene resins. Although these low-molecular-weight polyethylenes have good spinnability, the low fiber strength of the resulting fibers lead to significant fuzzing, which hindered the continuity of the web, making manufacturing difficult.

As a method to solve the above problems, the method for producing a polyethylene non-woven fabric by a meltblown method is disclosed, where the polyethylene non-woven fabric is formed from a resin composition containing a polyethylene (A) having a weight-average molecular weight of from 21000 to 45000 and a melt flow rate of from 15 g/10min to 250 g/10min and a polyethylene wax (B) having a weight-average molecular weight of 12000 or less at a weight ratio (A)/(B) ranging from 70/30 to 30/70 (Patent Document 1).

Further, petroleum-based synthetic fibers and petroleum-based plastic resins containing polyolefins, such as polypropylene and polyethylene, are difficult to decompose and therefore pose significant obstacles in realizing a Sound Material-Cycle Society due to, for example, waste disposal problems. In addition, carbon dioxide generated when these fibers and resins are burned contributes to global warming. Furthermore, because the raw materials for these fibers and resins are derived from petroleum, the depletion of fossil resources is a concern. Under these circumstances, there has been growing demands for alternatives to and reduced usage of these fibers and resins, even in products such as resin films and nonwoven fabrics.

To reduce the environmental impact, the replacement of part of raw materials from the petroleum-derived resins with the plant-derived resins has been studied in the field of resin films (Patent Document 2).

According to Patent Document 2, the plant-derived resins have no differences from the conventional petroleum-derived resins in chemical structure and are expected to have equivalent physical properties to the petroleum-derived resins. However, it is also disclosed that, resin films including plant-derived resins, for example, a sealant film including a plant-derived polyethylene-based resin actually exhibits different properties from a sealant film consisting of a petroleum-derived polyethylene-based resin.

Also, electret materials using polyethylene resins have recently been studied.

Conventionally, materials known as electrets have been widely used. Electrets are a variety of materials capable of maintaining and utilizing static electronic field without continuous external energy supply by performing various operations on various dielectric materials. Taking advantage of the static electric field to the external environment, electrets have been used for microphones, sensors, generators, and protection and or separation applications.

In the separation and protection applications, in addition to electrets used in a planar shape, for example, a film form, a method for enhancing the functionalities by combining them with separation and filtration applications inherent in porous materials themselves are known. For example, a filter including a fibrous product has a high porosity and thus achieves a long service life and low ventilation resistance, hence, the filter has been widely used. The filter made of a fibrous product captures particles on fibers by mechanical collection mechanisms, such as interception, diffusion, and inertial impaction. However, it is known that the filter has minimum collection efficiency when particles captured under practical conditions have an aerodynamic equivalent diameter of from approximately 0.1 $\mu$m to 1.0 $\mu$m. To compensate for this limitation, electret filters taking advantage of the electrostatic attraction of the electret have been used.

It is known that, in order to improve the collection efficiency of an electret filter, an electret is preferably formed by imparting an electrostatic charge to a fibrous product by a method in which the fibrous product is contacted with or collided with a liquid (a liquid contact charging method). For example, as an electret that excels in both cost and performance, an electret formed by imparting an electrostatic charge by contacting a fibrous product formed from a mixture of a resin containing a polyolefin resin as a main component and a nitrogen-containing compound such as a hindered-amine-based compound with a liquid such as water, is known.

Conventionally, polytetrafluoroethylene, polypropylene, and polyvinylidene fluoride have been known as polymer resins available for forming electret materials. However, polyethylene has rarely been used for electrets because polyethylene does not retain charge after being charged due to charge dissipation. Therefore, methods have been proposed for producing polyethylene electrets by blending a polyethylene resin with a modified polyethylene resin graft copolymerized with an unsaturated carboxylic acid and to improve the charging characteristics, or by blending ethylene-based random copolymer (Patent Document 3).

Alternatively, it may be considered to blend polyethylene with a polypropylene, which has been used for electret materials. Although both polypropylene and polyethylene are classified as polyolefin-based materials, they are known to be mutually incompatible and blending and compounding them without causing phase separation is technically difficult.

PRIOR ART DOCUMENTS

PATENT DOCUMENTS

Patent Document 1: JP-B2-3995885
Patent Document 2: JP-A-2018-052120
Patent Document 3: JP-A-H10-308326

SUMMARY OF THE INVENTION

PROBLEMS TO BE SOLVED BY THE INVENTION

Although studies have been conducted to reduce the environmental impact in the field of nonwoven fabrics, it was found that a meltblown nonwoven fabric with a fine denier could not be obtained when attempting to produce a nonwoven fabric from the plant-derived polyethylene resin with reference to Patent Document 2 by the method disclosed in Patent Document 1. In other words, the use of the plant-derived polyethylene resin with conventionally known methods for producing the nonwoven fabric results in low productivity and fails to form a meltblown nonwoven fabrics with fine denier.

The present invention has been carried out to solve the above problems, and it is an object of the present invention to provide a resin composition which can contribute to reducing the environmental impact and improving productivity.

An object of a preferred embodiment of the present invention is to provide a meltblown nonwoven fabric formed from a polyethylene resin having fine denier, high productivity, and a low environmental impact, which has not been achieved by conventionally known methods (hereinafter, referred to as the first object).

The present invention includes an electret material formed from a polyethylene resin as a preferred embodiment, and electret materials formed from polyethylene resins have the following drawbacks.

The production cost of the modified polyethylene resin is high and thus has not been used for general purposes. Although the use of the ethylene-based random copolymer alone gives relatively good results, the use of the polyethylene resin blended with the ethylene-based random copolymer may decrease electret performance, demonstrating that the polyethylene resin itself has problems with electret performance. Also, in the field of electrets, there has been a demand for replacing some petroleum-derived resins with the plant-derived resins to reduce the environmental impact.

It is an object of another preferred embodiment of the present invention is to provide a novel electret material formed from a polyethylene resin and having high productivity, high electret performance, and a low environmental impact, which has not been achieved by conventionally known methods (hereinafter, referred to as the second object).

Further, electret materials are known to have the following problems to be solved.

Conventionally known electret materials formed from polyethylene resins have a problem of low electric charge stability. Meanwhile, the electret materials may experience a reduction in the retained electrostatic force, or in other words, the charge, due to heat treatment during, for example, processing. Also, in the field of electrets, there has been a growing demand for replacing part of raw materials from the petroleum-derived resins with the plant-derived resins to reduce the environmental impact.

An object of still another preferred embodiment of the present invention is to provide a novel electret material formed from the polyethylene resin and having high electric charge stability and a low environmental impact, which has not been achieved by conventionally known methods (hereinafter, referred to as the third object).

SOLUTIONS TO THE PROBLEMS

As a result of earnest studies to solve the above problems, the present inventors have found that the polyethylene resin having the following features can effectively solve the above problems, in particular, the above problems of the meltblown nonwoven fabrics and the electret materials.

1. A resin composition comprising:

a polyethylene resin;
a polypropylene resin; and
a compatibilizer,

wherein the polyethylene resin contains a plant-derived polyethylene resin.

2. The resin composition according to 1, further comprising a nitrogen-containing compound.

3. The resin composition according to 1, further comprising a nitrogen-containing compound and a metal salt of a fatty acid.

4. The resin composition according to any one of 1 to 3, wherein the resin composition comprises the compatibilizer in an amount of from 0.1% by mass to 20% by mass based on 100% by mass of the resin composition.

5. The resin composition according to 2, wherein the resin composition comprises the nitrogen-containing compound in an amount of from 0.1% by mass to 5% by mass based on 100% by mass of the resin composition.

6. The resin composition according to 3, wherein the resin composition comprises the nitrogen-containing compound in an amount of from 0.1% by mass to 5% by mass, and the metal salt of a fatty acid in an amount of from 0.01% by mass to 1% by mass, based on 100% by mass of the resin composition.

7. The resin composition according to any one of 1 to 3, wherein the resin composition comprises the polyethylene resin in an amount of from 10% by mass to 98% by mass based on 100% by mass of the resin composition.

8. The resin composition according to any one of 1 to 3, wherein the compatibilizer is present in at least one of the polyethylene resin or the polypropylene resin.

9. The resin composition according to 2 or 3, wherein the nitrogen-containing compound contains a hindered-amine-based compound.

10. A meltblown nonwoven fabric formed from the resin composition according to 1.

11. The meltblown nonwoven fabric according to 10, wherein the meltblown nonwoven fabric includes fibers having an average fiber diameter of 8 $\mu$m or less.

12. An electret material formed from the resin composition according to 2 or 3.

13. The electret material according to 12, wherein the electret material is in a form of a sheet product.

14. The electret material according to 13, wherein the sheet product is a meltblown nonwoven fabric or a spunbond nonwoven fabric.

15. The electret material according to 14, wherein the electret material is imparted with an electric charge by contact with a liquid.

16. An electret filter comprising the electret material according to 14.

17. A filter material comprising the electret filter according to 16,

wherein the filter material has a performance retention rate of 0.75 or more, the performance retention rate being determined by dividing a value of filter material quality factor (QF) after application of a heat load of 100°C to the filter material by a value of filter material quality factor (QF) before application of the heat load of 100°C to the filter material,
wherein the filter material quality factor (QF) is defined by the following formula.

$$\text{QF [mmAq}^{-1}] = -[\ln(1 - (\text{particle collection efficiency (\%)}/100))]/[\text{ventilation resistance (mmAq)}]$$

18. A method for producing an electret material, comprising:
melt mixing a polyethylene resin at least partially containing a plant-derived polyethylene resin, a polypropylene resin, a compatibilizer, and a nitrogen-containing compound.

19. A method for producing an electret material, comprising:
melt mixing a polyethylene resin at least partially containing a plant-derived polyethylene resin, a polypropylene resin, a compatibilizer, a nitrogen-containing compound, and a metal salt of a fatty acid.

The present invention that solves the first to third objects has the following features.

As a result of earnest studies to solve the first object, the present inventors have found that the inclusion of the polyethylene resin, the polypropylene resin, and the compatibilizer enables the production of a meltblown nonwoven fabric with fine denier, high productivity, and a low environmental impact by a meltblown method, and have completed the present invention. The present invention that has solved the first object preferably has the following features (hereinafter, referred to as the first embodiment).

1-1. A meltblown nonwoven fabric including a polyethylene resin, a polypropylene resin, and a compatibilizer, wherein the polyethylene resin contains a plant-derived polyethylene resin.

1-2. The meltblown nonwoven fabric according to 1-1, wherein the meltblown nonwoven fabric contains the compatibilizer in an amount of from 0.1% by mass to 20% by mass based on 100% by mass of the meltblown nonwoven fabric.

1-3. The meltblown nonwoven fabric according to 1-1 or 1-2, wherein the meltblown nonwoven fabric contains the polyethylene resin in an amount of from 10% by mass to 98% by mass based on 100% by mass of the meltblown nonwoven fabric.

1-4. The meltblown nonwoven fabric according to any one of 1-1 to 1-3, wherein the compatibilizer is present in at least one of the polyethylene resin or the polypropylene resin.

In the meltblown nonwoven fabric of the present invention, the compatibilizer may be present in either the interface of the polyethylene resin or the interface of the polypropylene resin, or both.

1-5. The meltblown nonwoven fabric according to any one of 1-1 to 1-4, wherein the meltblown nonwoven fabric includes fibers having an average fiber diameter of 8 $\mu$m or less.

As a result of earnest studies to solve the second object, the present inventors have found that the inclusion of the polyethylene resin at least partially containing a plant-derived polyethylene resin, the polypropylene resin, the compatibilizer, and the nitrogen-containing compound enables the electret material to have high productivity and electret performance, and a low environmental impact, and have completed the present invention. The present invention that has solved the second object preferably has the following features (hereinafter, referred to as the second embodiment).

2-1. An electret material including a polyethylene resin, a polypropylene resin, a compatibilizer, and a nitrogen-containing compound, wherein the polyethylene resin contains a plant-derived polyethylene resin.

2-2. The electret material according to 2-1, wherein the electret material contains 80% by mass or more of the polyethylene resin and the polypropylene resin, 0.1% by mass to 20% by mass of the compatibilizer, and 0.1% by mass to 5% by mass of the nitrogen-containing compound based on 100% by mass of the electret material, and the polyethylene resin contains a plant-derived polyethylene resin.

2-3. The electret material according to 2-1 or 2-2, wherein the electret material contains the polyethylene resin in an amount of from 10% by mass to 98% by mass based on 100% by mass of the electret material.

2-4. The electret material according to any one of 2-1 to 2-3, wherein the compatibilizer is present in at least one of the polyethylene resin or the polypropylene resin.

2-5. The electret material according to any one of 2-1 to 2-4, wherein the nitrogen-containing compound contains a hindered-amine-based compound.

2-6. The electret material according to any one of 2-1 to 2-5, wherein the electret material is in a form of a sheet product.

2-7. The electret material according to 2-6, wherein the sheet product is a meltblown nonwoven fabric or a spunbond nonwoven fabric.

2-8. The electret material according to any one of 2-1 to 2-7, wherein the electret material is imparted with an electric charge by contact with a liquid.

2-9. The electret filter including the electret material according to any one of 2-1 to 2-8.

2-10. A method for producing an electret material, comprising:

melt mixing a polyethylene resin at least partially containing a plant-derived polyethylene resin, a polypropylene resin, a compatibilizer, and a nitrogen-containing compound.

As a result of earnest studies to solve the third object, the present inventors have found that the inclusion of the polyethylene resin at least partially containing a plant-derived polyethylene resin, the polypropylene resin, the compatibilizer, the nitrogen-containing compound, and the metal salt of a fatty acid enables the electret material to have high productivity and electret performance, and a low environmental impact, and have completed the present invention. The present invention preferably has the following features (hereinafter, referred to as the third embodiment).

3-1. An electret material including a polyethylene resin, a polypropylene resin, a compatibilizer, a nitrogen-containing compound, and a metal salt of a fatty acid, wherein the polyethylene resin contains a plant-derived polyethylene resin.

3-2. The electret material according to 3-1, wherein the electret material contains 80% by mass or more of the polyethylene resin and the polypropylene resin, 0.1% by mass to 20% by mass of the compatibilizer, 0.1% by mass to 5% by mass of the nitrogen-containing compound, and 0.01% by mass to 1% by mass of the metal salt of a fatty acid based on 100% by mass of the electret material, and the polyethylene resin contains a plant-derived polyethylene resin.

3-3. The electret material according to 3-1 or 3-2, wherein a performance retention rate is 0.75 or more, the performance retention rate being determined by dividing a value of filter material quality factor (QF) after application of a heat load of 100°C to the filter material by a value of filter material quality factor (QF) before application of the heat load of 100°C to the filter material,

wherein the filter material quality factor (QF) is defined by the following formula.

$$QF \ [mmAq^{-1}] = -[\ln(1 - (\text{particle collection efficiency } (\%)/100))]/[\text{ventilation resistance (mmAq)}]$$

3-4. The electret material according to any one of 3-1 to 3-3, wherein the electret material contains the polyethylene resin in an amount of from 10% by mass to 98% by mass based on 100% by mass of the electret material.

3-5. The electret material according to any one of 3-1 to 3-4, wherein the compatibilizer is present in at least one of the polyethylene resin or the polypropylene resin.

3-6. The electret material according to any one of 3-1 to 3-5, wherein the nitrogen-containing compound contains a hindered-amine-based compound.

3-7. The electret material according to any one of 3-1 to 3-6, wherein the electret material is in a form of a sheet product.

3-8. The electret material according to 3-7, wherein the sheet product is a meltblown nonwoven fabric or a spunbond nonwoven fabric.

3-9. The electret material according to any one of 3-1 to 3-8, wherein the electret material is imparted with an electric charge by contact with a liquid.

3-10. The electret filter including the electret material according to any one of 3-1 to 3-9.

3-11. A method for producing an electret material, comprising:

melt mixing a polyethylene resin at least partially containing a plant-derived polyethylene resin, a polypropylene resin, a compatibilizer, a nitrogen-containing compound, and a metal salt of a fatty acid.

EFFECTS OF THE INVENTION

According to the resin composition of the present invention, the above problems can be solved. Specific effects corresponding to each of the embodiments are as follows.

According to the first embodiment of the present invention, the meltblown nonwoven fabric with fine denier and high productivity, and a low environmental impact, which cannot be achieved from the polyethylene resin alone, can be provided.

According to the second embodiment as a preferred embodiment of the present invention, the electret material and the electret filter with high productivity and electret performance, and a low environmental impact, which cannot be achieved from the polyethylene resin alone, can be provided. Particularly, when the electret material is the meltblown nonwoven fabric, the electret material of the meltblown nonwoven fabric having further finer denier, higher productivity, and lower environmental impact can be provided.

According to the third embodiment as another preferred embodiment of the present invention, the electret material and the electret filter with high electric charge stability and a low environmental impact, which cannot be achieved from the polyethylene resin, can be provided. Particularly, when the electret material is the meltblown nonwoven fabric, the electret material of the meltblown nonwoven fabric having further finer denier, higher productivity, and lower environmental impact can be provided.

DESCRIPTION OF EMBODIMENTS

Hereinafter, the present invention will be specifically described, and the scope of the present invention is not limited to the followings. The present invention can be carried out with modifications within a range conforming to the gist of the present invention, all of which are included in the technical scope of the present invention.

The resin composition of the present invention includes a polyethylene resin, a polypropylene resin, and a compatibilizer, and the polyethylene resin includes a plant-derived polyethylene resin.

The meltblown nonwoven fabric according to the first embodiment of the present invention includes the polyethylene resin, the polypropylene resin, and the compatibilizer, and a part of the polyethylene resin is derived from plants. A preferred embodiment includes a meltblown nonwoven fabric consisting of the polyethylene resin, the polypropylene resin, and the compatibilizer.

The electret material according to the second embodiment of the present invention further includes a nitrogen-containing compound in addition to the meltblown nonwoven fabric according to the first embodiment. In other words, the electret material according to the second embodiment includes the polyethylene resin, the polypropylene resin, the compatibilizer, and the nitrogen-containing compound, and at least a part of the polyethylene resin is derived from plants. A preferred embodiment includes an electret material consisting of the polyethylene resin, the polypropylene resin, the compatibilizer, and the nitrogen-containing compound.

The electret material according to the third embodiment of the present invention further includes a metal salt of a fatty acid in addition to the electret material according to the second embodiment. In other words, the electret material according to the third embodiment includes the polyethylene resin, the polypropylene resin, the compatibilizer, the nitrogen-containing compound, and the metal salt of a fatty acid, and at least a part of the polyethylene resin is derived from plants. A preferred embodiment includes an electret material consisting of the polyethylene resin, the polypropylene resin, the compatibilizer, the nitrogen-containing compound, and the metal salt of a fatty acid.

Hereinafter, the raw materials commonly used in the resin composition, the first, second, and third embodiments of the present invention, will be described.

<Polyethylene Resin>

In the present invention, the content of the polyethylene resin is preferably from 10% by mass to 98% by mass, more preferably from 20% by mass to 95% by mass, and further preferably from 30% by mass to 90% by mass, based on 100% by mass of the resin composition, i.e., 100% by mass of the total amount of the polyethylene resin, the polypropylene resin, and the compatibilizer.

In the first embodiment, the content of the polyethylene resin is expressed as a percentage based on 100% by mass of the meltblown nonwoven fabric, i.e., 100% by mass of the total amount of the polyethylene resin, the polypropylene resin, and the compatibilizer.

In the second embodiment, each preferred content of the polyethylene resin is expressed as a percentage based on 100% by mass of the electret material, i.e., 100% by mass of the total amount of the polyethylene resin, the polypropylene resin, the compatibilizer, and the nitrogen-containing compound.

In the third embodiment, each preferred content of the polyethylene resin is expressed as a percentage based on 100% by mass of the electret material, i.e., 100% by mass of the total amount of the polyethylene resin, the polypropylene resin, the compatibilizer, the nitrogen-containing compound, and the metal salt of a fatty acid.

The polyethylene resin used in the present invention may be an ethylene homopolymer, specifically, a high pressure-processed low-density polyethylene, linear low-density polyethylene, or high-density polyethylene. The polyethylene resin may be a copolymer formed from ethylene and other monomers. The copolymer may be a random copolymer or a block copolymer.

<Plant-derived Polyethylene Resin>

The polyethylene resin used in the present invention contains the plant-derived polyethylene resin in an amount of from 1% by mass to 100% by mass, more preferably from 20% by mass to 100% by mass, further preferably from 50% by mass to 100% by mass, most preferably from 80% by mass to 100% by mass, and it is also preferable that the polyethylene resin consists only of the plant-derived polyethylene resin. In the present invention, the term "plant-derived" means containing a carbon atom originating from plant raw materials. When the plant-derived polyethylene resin is in the form of a mixture with a resin derived from fossil fuel, the amount of the plant-derived polyethylene resin can be calculated from the ratio of the number of carbon atoms contained in the total polyethylene.

In the present invention, at least a portion of the carbon atoms in the plant-derived polyethylene resin originates from plant raw materials. The plant-derived polyethylene resin is a homopolymer of ethylene containing a carbon atom originating from a plant, or a copolymer with a comonomer containing a carbon atom originating from plants. Specific examples of the plant-derived polyethylene resin include high-density polyethylenes (HDPE), low-density polyethylenes (LDPE), linear low-density polyethylenes (LLDPE), and mixtures thereof, obtained by polymerizing ethylene derived from bioethanol.

Examples of $\alpha$-olefins as comonomers of the LLDPE include $\alpha$-olefins with 3 to 20 carbon atoms such as propylene, 1-butene, 1-pentene, 1-hexene, 1-octene, 1-nonene, and 4-methylpentene, and mixtures thereof. These $\alpha$-olefins may be plant-derived $\alpha$-olefins derived from bioethanol, or non-plant-derived, i.e., petroleum-derived $\alpha$-olefins. Various types of petroleum-derived $\alpha$-olefins are commercially available, and the physical characteristics of the polyethylene-based resin produced by using these petroleum-derived $\alpha$-olefins can be easily adjusted. The use of the plant-derived $\alpha$-olefin can further enhance the degree of biomass of the end products.

The raw materials for the plant-derived ethylene and the plant-derived $\alpha$-olefins are not particularly limited, and examples of the raw materials include vegetable oil, food waste, wood, paper, various types of cellulose, and sugar. The plant-derived ethylene used in the present invention is obtained preferably from raw materials such as a sugarcane, a maize, and a sweet potato, and particularly preferably from a sugar cane. As an example of production methods, a sugar solution or starch is prepared from plants such as a sugarcane, a corn, a sweet potato, a sugar beet, a cassava (manioc), and a sugar beet is fermented by microorganisms such as yeast to produce bioethanol according to conventional methods. This bioethanol is then heated in the presence of a catalyst to obtain plant-derived ethylene and plant-derived $\alpha$-olefins (for example, 1-butene and 1-hexene) through intramolecular dehydration reaction. Subsequently, plant-derived polyethylene resin can be produced using the obtained plant-derived ethylene and plant-derived $\alpha$-olefins in the same manner as in the production of petroleum-derived polyethylene resin.

Methods for producing a plant-derived ethylene, a plant-derived $\alpha$-olefin, and a plant-derived polyethylene resin are disclosed in detail in Japanese Unexamined Patent Application Publication No. 2011-506628. The plant-derived polyethylene resin used in the present invention may be, for example, Green PE (manufactured by Braskem S.A.).

The various types of polyethylene described above can be used as the plant-derived polyethylene resin used in the present invention, and the density thereof is preferably in the range of from 0.890 g/cm$^3$ to 0.970 g/cm$^3$, and more preferably from 0.910 g/cm$^3$ to 0.960 g/cm$^3$.

<Polypropylene Resin>

In the present invention, the content of the polypropylene resin is preferably from 2% by mass to 90% by mass, more preferably from 5% by mass to 85% by mass, and further preferably from 10% by mass to 80% by mass, based on 100% by mass of the resin composition.

In the first embodiment, each preferred content of the polypropylene resin is expressed as a percentage based on 100% by mass of the meltblown nonwoven fabric. The inclusion of the polypropylene resin added to the polyethylene resin can improve the productivity of the meltblown nonwoven fabric by a meltblown method, and eliminate gelation caused by a cross-linking reaction, particularly at a temperature of 250°C or higher, thereby enabling the nonwoven fabric to be produced with a fine denier.

In the second and third embodiments, each preferred content of the polypropylene resin is expressed as a percentage based on 100% by mass of the electret materials.

The polypropylene resin used in the present invention may be derived from "fossil fuels" or "plants" or may be a mixture of the plant-derived polypropylene resin and the petroleum-derived polypropylene resin. The composition of the polypropylene resin can be advantageously selected from the viewpoint of availability and LCA.

In the present invention, the term "fossil fuel-derived" means that the main component is a component obtained by thermally cracking naphtha derived from fossil fuels such as petroleum, coal, and natural gas. The term "plant-derived" means that the polypropylene resin is obtained from bio-propylene or bio-naphtha, similar to polyethylene. The polypropylene resin used in the present invention may be any type of polypropylene resin suitable for forming the resin composition of the present invention, preferably for the meltblown nonwoven fabric (the first embodiment), and the electret materials (the second and third embodiments).

The polypropylene used in the present invention may be a homopolymer, a random copolymer, or a block copolymer, and two or more of these may be used in combination. For example, the petroleum-derived polypropylene may be a homopolymer, a random copolymer, or a block copolymer, and two or more of these may be used in combination.

The total amount of the polyethylene resin and the polypropylene resin is preferably 80% by mass or more based on 100% by mass of the total amount of the resins and the compatibilizer included in the resin composition of the present invention.

The total amount of the polyethylene resin and the polypropylene resin is preferably 80% by mass or more based on 100% by mass of the total amount of the resins and the compatibilizer contained in the meltblown nonwoven fabric (the first embodiment) of the present invention.

In the second and third embodiments, the total amount of the polyethylene resin and the polypropylene resin is preferably 80% by mass or more based on 100% by mass of the electret material.

<Compatibilizer>

In the present invention, the content of the compatibilizer is preferably from 0.1% by mass to 20% by mass, more preferably from 1% by mass to 15% by mass, and further preferably from 2% by mass to 10% by mass based on 100% by mass of the resin composition, i.e., 100% by mass of the total amount of the polyethylene resin, the polypropylene resin, and the compatibilizer.

In the first embodiment, each preferred content of the compatibilizer is expressed as a percentage based on 100% by mass of the meltblown nonwoven fabric.

In the second and third embodiments, each preferred content of the compatibilizer is expressed as a percentage based on 100% by mass of the electret materials. Particularly, in the third embodiment, if the content of the compatibilizer is less than 0.1% by mass, the compatibilizing effect cannot be developed, and the productivity may be decreased. If the content of the compatibilizer is more than 20% by mass, the electric charge stability may be decreased.

The compatibilizer may be a compound that enables the polyethylene resin and the polypropylene resin, for example, the plant-derived polyethylene resin and the petroleum-derived polypropylene resin, to dissolve in each other. Examples of the compatibilizer compounds include graft copolymers such as a low-density polyethylene-g-polymethyl methacrylate, ethylene-glycidyl methacrylate copolymer-g-polymethyl methacrylate, ethylene-ethyl acrylate copolymer-g-polymethyl methacrylate, ethylene-vinyl acetate copolymer-g-polymethyl methacrylate, and ethylene-ethyl acrylate-maleic anhydride copolymer-g-polymethyl methacrylate; ethylene vinyl alcohol; triblock copolymers such as polystyrene-b-polyethylene butylene-b-crystalline polyolefin, terminal-modified polystyrene-b-polyethylene butylene-b-crystalline polyolefin, and crystalline polyolefin-b-polyethylene butylene-b-crystalline polyolefin, polycaprolactone, polypropylene/styrene-based elastomer compound, and maleic anhydride-modified polypropylene. Further, a graft or block polymer that has the same polymer segment as base polymers to be mutually compatible, i.e., the segments identical to the polyethylene and the polypropylene in the present invention, may be employed.

Examples of commercially available compatibilizers include MODIPER (registered trademark) A1100, A1401, A3400, A4100, 4300, 4400, 5300, 5400, 6600, CL130D, CL430-G, SV10B, SV10A, S101, SV30B, S501, and MS10B (all manufactured by NOF CORPORATION); IGETABOND (registered trademark) 2C, E, 2B, 7B, 7L, 7M, and VC40 (all manufactured by Sumitomo Chemical Co., Ltd.); BONDINE (registered trademark) LX4110, HX8210, TX8030, HX8290, 5500, and AX8390 (all manufactured by Tokyo Zairyo Co., Ltd.); REXPEARL (registered trademark) ET220X, ET230X, ET530H, ET720X, EB050S, EB240H, EB330H, EB140F, EB230X, EB440H, A1100, A3100, A1150, A4200, A6200, A4250 (all manufactured by Japan Polyethylene Corporation); RESEDA (registered trademark) GS-1015, GP-310S, and GP-301; ARUFON (registered trademark) UG-4010, UG-4035, UG-4040, UG-4070, UM-9001, UM-9030, and UM-9040 (all manufactured by TOAGOSEI CO.,LTD.); EPOCROS (registered trademark) RPS-1005 (manufactured by NIPPON SHOKUBAI CO., LTD.); DURANATE (registered trademark) 24A-100, 22A-75P, TPA-100, TKA-100, P301-75E, 21S-75E, MFA-75B, MHG-80B, E402-80B, E405-70B, TSE-100, AE700-100, TSA-100, TSS-100, A201H, TUL-100, TLA-100, D101, D201, A201H, 50M-HDI, MF-K60B, SBB-70P, SBN-70D, MF-B60B, 17B-60P, TPA-B80E, E402-B80B, and SBF-70E (all manufactured by Asahi Kasei Corporation); DYNARON (registered trademark) 6200P, 6201B, 8600P, 8300P, 8903P, and 9901P (all manufactured by JSR Corporation); L-MODU (registered trademark) S400, S600, and S901 (all manufactured by Idemitsu Kosan Co.,Ltd.); Vistamaxx (registered trademark) 3000, 3020FL, 3588FL, 3980FL, 6000, 6102, 6102FL, 6202, 6202FL, 6502, 7020BF, 8380, 8780, and 8880 (all manufactured by Exxon Mobil Corporation); FORTIFY (registered trademark) C0570, C0570D, C1055D, C1070, C1070D, C1085, C11075DF, C13060, C13060D, C30070D, C3080, C5070, and C5070D (all manufactured by Saudi Basic Industries Corporation, SABIC).

The compatibilizer is not limited to those mentioned above, and compatibilizers described in "Compatibilizer for polymers" (CMC Publishing Co., Ltd.) can be suitably used. The compatibilizers may be used alone or in combination of two or more of them.

In the present invention, the compatibilizer is contained in the resin composition, preferably in the meltblown nonwoven fabric (the first embodiment), and the electret materials (the second and third embodiments), and the compatibilizer may be present in the interface of either the polyethylene resin or the interface of the polypropylene resin, or in both interfaces.

<Others>

The melt flow rates (MFR) of the polypropylene resin and the polyethylene resin may be appropriately selected. The configuration of the present invention enables the meltblown nonwoven fabric to be produced with high productivity and fine denier.

With respect to the polyethylene resin used in the present invention, the value obtained by dividing the melt flow rate (MFR) of the polypropylene resin measured at a temperature of 230°C under a load condition of 2.16 kg according to ASTM D 1238 by the melt flow rate (MFR) of the polyethylene resin measured at a temperature of 190°C under a load condition of 2.16 kg according to ASTM D 1238 is preferably in the range of from 0.1 to 200, more preferably from 0.5 to 150, further preferably from 1 to 100, and most preferably from 1.5 to 50.

The resin composition of the present invention, preferably the meltblown nonwoven fabric (the first embodiment), and the electret materials (the second and third embodiments) may optionally contain other polymers, and compounding agents such as a coloring agent, stabilizer, and nucleating agent, if needed, as long as the objects of the present invention are not impaired. Examples of the optional components include stabilizers such as a conventionally known heat-resistant stabilizer and a weathering stabilizer, slipping agents, anti-blocking agents, antifogging agents, lubricants, dyes, pigments, natural oils, and synthetic oils.

<Nitrogen-containing Compound>

The resin composition of the present invention preferably includes the nitrogen-containing compound, and more preferably includes the nitrogen-containing compound in the percentage as described below based on 100% by mass of the resin composition.

In each of the second and third embodiments, the content of the nitrogen-containing compound is preferably from 0.1% by mass to 5% by mass, more preferably from 0.5% by mass to 3% by mass, and further preferably from 0.75% by mass to 1.5% by mass, based on 100% by mass of the electret materials. The content of the nitrogen-containing compound of less than 0.1% by mass may cause decreases in the electric charge quantity and thus filtration properties. The content of the nitrogen-containing compound of more than 5% by mass may cause increases in the hygroscopic properties, thereby reducing stability as an electret.

The nitrogen-containing compound is not particularly limited as long as the above desired characteristics are imparted, and the nitrogen-containing compound is preferably a hindered-amine-based compound having at least one of the 2,2,6,6-tetramethylpiperidyl structure or the triazine structure, and the hindered-amine-based compound more preferably has the 2,2,6,6-tetramethylpiperidyl structure and the triazine structure.

The hindered-amine-based compound is not particularly limited, and examples of the hindered-amine-based compound include poly[{6-(1,1,3,3-tetramethylbutyl)amino-1,3,5-triazine-2,4-diyl} {(2,2,6,6-tetramethyl-4-piperidyl)iminolhexamethylenel(2,2,6,6-tetramethyl-4-piperidyl)iminol] (Chimassorb (registered trademark) 944LD, manufactured by BASF Japan Ltd.), a polycondensate of dimethyl succinate-1-(2-hydroxyethyl)-4-hydroxy-2,2,6,6-tetramethyl-4-piperidine (Tinuvin (registered trademark) 622LD, manufactured by BASF Japan Ltd.), 2-[[3,5-bis(1,1-dimethylethyl)-4-hydroxyphenyl]methyl]-2-butylpropanedioic acid bis[1,2,2,6,6-pentamethyl-4-piperidinyl] (Tinuvin (registered trademark) 144, manufactured by BASF Japan Ltd.), a polycondensate of dibutylamine 1,3,5-triazine·N,N-bis(2,2,6,6-tetramethyl-4-piperidyl)-1,6-hexamethylenediamine-N-(2,2,6,6-tetramethyl-4-piperidyl)butylamine (Chimassorb (registered trademark) 2020FDL manufactured by BASF Japan Ltd.), and 2-(4,6-diphenyl-1,3,5-triazine-2-yl)-5-(hexyloxy)-phenol (Tinuvin (registered trademark) 1577FF, manufactured by BASF Japan Ltd.). Among them, a hindered amine-based compound having the 2,2,6,6-tetramethylpiperidine structure and the triazine structure is preferable, and Chimassorb (registered trademark) 944LD and Chimassorb (registered trademark) 2020FD are more preferable. As the hindered-amine-based compounds, one of the above compounds may be used alone or two or more of the above compounds may be used in combination.

<Metal Salt of a Fatty Acid>

The resin composition of the present invention preferably includes the nitrogen-containing compound and the metal salt of a fatty acid, and more preferably includes the metal salt of a fatty acid desirably in the following proportions based on 100% by mass of the resin composition.

Further, in the third embodiment, the content of the metal salt of a fatty acid is preferably from 0.01% by mass to 1.0% by mass, more preferably from 0.025% by mass to 0.5% by mass, and further preferably from 0.05% by mass to 0.1% by mass based on 100% by mass of the electret material.

The metal salt of a fatty acid is not particularly limited, and preferably has a linear fatty acid group. The fatty acid group preferably has 10 to 20 carbon atoms. Specific examples of the metal salt of a fatty acid include aluminum laurate, aluminum myristate, aluminum palmitate, aluminum stearate, magnesium laurate, magnesium myristate, magnesium palmitate, and magnesium stearate.

<Production Method>

Hereinafter, the method for producing the resin composition of the present invention, the method for producing the meltblown nonwoven fabric according to the first embodiment, the method for producing the electret material according to the second embodiment, and the method for producing the electret material according to the third embodiment will be described. The production methods of the present invention are not limited to the followings and can be carried out with appropriate modifications within the gist described above and/or below.

<Method for Producing Resin Composition>

The resin composition of the present invention can be produced by melt mixing the polyethylene resin containing at least a portion of a plant-derived polyethylene resin, along with the polypropylene resin, the compatibilizer, and other compounding agents, using an extruder. The resulting resin composition can be further treated by various known methods. The resin composition of the present invention is preferably used in the production method according to the first embodiment to produce the desired meltblown nonwoven fabric through the required production steps. Further, the resin composition obtained by melt mixing the above resin composition with the nitrogen-containing compound and/or the metal salt of a fatty acid, is preferably used in the following processes to produce the electret materials according to the second and third embodiments.

<Method for Producing Meltblown Nonwoven Fabric>

The method for producing the meltblown nonwoven fabric according to the first embodiment of the present invention includes melt mixing a resin composition including the polyethylene resin containing at least a portion of a plant-derived polyethylene resin, along with the polypropylene resin, the compatibilizer, and other compounding agents, using an extruder. The resulting melt composition is discharged from the spinning nozzles of a spinneret is blown by high-speed and high-temperature air flow blown from around the spinneret, so that the resulting self-adhesive microfibers can accumulate on a collection belt to a predetermined thickness, thereby producing a web using the meltblown method. If necessary, an entanglement process may be subsequently conducted.

Methods for entangling fibers are not particularly limited and include, for example, a method of heat embossing using an embossing roll, a method of fusing using ultrasonic waves, a method of entangling fibers using a water jet, a method of fusing through hot air-through processing, or a method using needle punching.

From the viewpoint of uniformity of the nonwoven fabric, the fibers forming the meltblown nonwoven fabric of the present invention have the average fiber diameter of preferably 10 $\mu$m or less, more preferably 8 $\mu$m or less, further preferably 5 $\mu$m or less, and most preferably 3 $\mu$m or less. The resin composition of the present invention enables the production of the nonwoven fabric with fine denier by a meltblown method, which cannot be achieved by other methods for producing nonwoven fabrics.

The meltblown nonwoven fabric of the present invention can be used for a wide range of applications. Particularly, the meltblown nonwoven fabric can be suitably used as materials for separation, sound absorption, hygiene products, and daily necessities.

<Method for Producing Electret Material>

Hereinafter, the methods for producing the electret materials according to the second and third embodiments will be described.

The electret material according to the second embodiment can be produced by melt mixing the polyethylene resin at least partially containing the plant-derived polyethylene resin, the polypropylene resin, the compatibilizer, and the nitrogen-containing compound.

The electret material according to the third embodiment is the same as the electret material according to the second embodiment except for the further inclusion of the metal salt of a fatty acid. The electret material according to the third embodiment is produced by melt mixing the polyethylene resin at least partially containing a plant-derived polyethylene resin, the polypropylene resin, the compatibilizer, the nitrogen-containing compound, and the metal salt of a fatty acid.

The melt mixing is conducted at a molten resin temperature of preferably 200°C or higher, further preferably 220°C or higher, and most preferably 250°C or higher. Steps other than the melt mixing can be carried out by employing conventionally known methods. The resulting melted resin composition may be formed into a sheet product by a known method, and the sheet product is exemplified by the meltblown nonwoven and spunbond nonwoven fabrics produced by known methods. A preferred example of the electret material includes a meltblown nonwoven fabric produced by the same method as that of the first embodiment.

<Shape of Electret Material>

The electret material of the present invention can be used in any required form and develop functions as an electret when used in the form of, for example, fibrous products, sheet products such as a film, extruded materials, porous membranes, powder, or as surface coating layers on other materials. Among them, the fibrous products are more preferable, and the meltblown nonwoven fabric and the spunbond nonwoven fabric are particularly preferable for filtering applications.

The fibrous product is preferably a fiber assembly, and examples of the fiber assembly include fibrous products consisting of filaments or staple fibers, such as woven or knitted fabrics, nonwoven fabrics, and cotton products, and fibrous products obtained from stretched films. The term "fiber assembly" refers to the state of fibers having fibrous shapes and the fusion of a part of fibers forming the fiber assembly due to melting or entanglement among fibers, when the surface of the electret is observed by equipment such as a scanning electron microscope or an optical microscope.

When the electret material of the present invention is in the form of a fibrous product (preferably the meltblown nonwoven fabric or the spunbond nonwoven fabric, hereinafter the same), the fibers included in the fibrous product have an average fiber diameter of preferably from 0.001 $\mu$m to 100 $\mu$m, more preferably from 0.05 $\mu$m to 50 $\mu$m, further preferably from 0.1 $\mu$m to 30 $\mu$m, particularly preferably from 0.3 $\mu$m to 25 $\mu$m, and most preferably from 0.5 $\mu$m to 20 $\mu$m. If the average fiber diameter is more than 100 $\mu$m, practical collection efficiency cannot be achieved, and efficiency reduction during the charge decay may be significantly increased in the third embodiment. Conversely, the average fiber diameter of less than 0.001 $\mu$m makes the production of the electret material imparted with an electric charge difficult. The fineness is calculated by measuring the fiber diameters of 100 distinct fibers by a scanning electron microscope within the same field of view, ensuring that the fibers do not overlap, and calculating a geometric average of the measured values.

The method for forming the electret of the present invention is not particularly limited as long as the electret material develops desired characteristics during use. When the electret material of the present invention is in the form of a sheet product, for example, a fibrous product (including the meltblown nonwoven fabric and the spunbond nonwoven fabric, hereinafter the same), the electret material with higher filtration characteristics can be obtained preferably by the liquid contact charging method, in which the fibrous product is brought into contact with or made to collide with a liquid. More specifically, preferred is a method in which the fibrous product is brought into contact with or made to collide with a liquid by methods such as suction, pressure application, or spouting.

The liquid for contact or collision used in the liquid contact charging method is not particularly limited as long as the desired characteristics can be obtained, and the liquid is preferably water from the viewpoint of handling properties and performance. Instead of water, a liquid obtained by adding a secondary component (a component other than water) to water may be used, and the electric conductivity and the pH of the liquid can be adjusted by the type and the amount of the added secondary component.

In the liquid contact charging method, the liquid brought into contact with or made to collide with the fibrous product has a pH of preferably from 1 to 11, more preferably from 3 to 9, and further preferably from 5 to 7. Also, in the liquid contact charging method, the liquid brought into contact with or made to collide with the fibrous product has an electric conductivity of preferably 100 $\mu$S/cm or less, more preferably 10 $\mu$S/cm or less, and further preferably 3 $\mu$S/cm or less.

The filter, and preferably the filter material, each including the electret material according to the present invention are also within the scope of the present invention. When the electret material of the present invention is used as a filter and a filter material, the QF value (filter material quality factor: QF [mmAq$^{-1}$] = -[ln(1 - (particle collection efficiency (%)/100))]/[ventilation resistance (mmAq)]) determined by the method described in the following Experimental Example 2 is 1.0 mmAq$^{-1}$ or more, preferably 1.1 mmAq$^{-1}$ or more, more preferably 1.2 mmAq$^{-1}$ or more, further preferably 1.3 mmAq$^{-1}$ or more, and most preferably 1.4 mmAq$^{-1}$ or more. It is especially preferable that the QF value exceeds the above range in an electret filter including the meltblown nonwoven fabric produced by a meltblown method and having an average fiber diameter of from 0.5 $\mu$m to 8 $\mu$m, preferably from 0.5 $\mu$m to 5 $\mu$m. If the QF value is less than 1.0 mmAq$^{-1}$, particles are not sufficiently captured by the electret, resulting in insufficient filter performance. The QF value in this specification is calculated based on the ventilation resistance when air is passed through the filter in the thickness direction of the filter at a wind speed of 10 cm/s, and the count value of particles in the 0.3 $\mu$m to 0.5 $\mu$m particles size range measured by a laser particle counter.

In the third embodiment of the present invention, a preferred embodiment includes a filter material with a performance retention rate of 0.75 or more, as determined by the electric charge stability described in the following Experimental Example 3.

The performance retention rate (AQF/BQF) is a value obtained by dividing a value of filter material quality factor (QF) after applying a heat load of 100°C to the sample (AQF) by the value of filter material quality factor (QF) before applying the heat load of 100°C to the sample (BQF).

When the electret material of the present invention is used as a filter or a filter material, the particle collection efficiency at a wind speed of 10 cm/s is adjustable according to required characteristics, and the particle collection efficiency is preferably 50% or more, more preferably 70% or more, further preferably 90% or more, and particularly preferably 95% or more. In this specification, the particle collection efficiency is calculated based on the particle count values of particles classified into the particle size fraction for a laser particle counter of from 0.3 $\mu$m to 0.5 $\mu$m before and after passing through the filter, when an airflow is applied in the thickness direction of the filter at a wind speed of 10 cm/s.

When the electret material of the present invention is used as a filter or a filter material, the ventilation resistance to an airflow application at a wind speed of 10 cm/s is preferably in the range of from 0.05 mmAq to 50 mmAq, more preferably from 0.2 mmAq to 30 mmAq, and particularly preferably from 0.5 mmAq to 20 mmAq. Too low ventilation resistance results in insufficient filter performance, and excessively high ventilation resistance causes advantages of the electret filter to be lost.

Each of the electret material, the electret filter, and the filter material of the present invention can be used in combination with another structural member, if needed. Accordingly, the electret material of the present invention can be used in combination with a pre-filter layer, a fiber protection layer, a reinforcing member, or a functional fiber layer.

Examples of the pre-filter layer and the fiber protection layer include spunbond nonwoven fabrics, thermal bond nonwoven fabrics, and foamed urethane. Examples of the reinforcing member include thermal bond nonwoven fabrics and various types of nets. Examples of the functional fiber layer include a colored fiber layer provided for identification of the antibacterial and antiviral properties or design purposes.

The electret material of the present invention can be used for various purposes. Particularly, the electret material can be suitably used for the purposes of protection, ventilation, anti-fouling, and waterproofness, specifically for dust respirators, dustproof clothing, various types of air conditioning elements, air purifiers, cabin air filters, and filters for protecting various types of equipment.

The present application claims benefit of priority to Japanese Patent Application Nos. 2022-138525, 2022-138526, and 2022-138527 filed on August 31st, 2022. The entire contents of the specifications of Japanese Patent Application Nos. 2022-138525, 2022-138526, and 2022-138527 filed on August 31st, 2022, are incorporated herein by reference.

EXAMPLES

Hereinafter, the present invention will be specifically described with Examples, and the scope of the present invention is not limited by the following Examples. The present invention can be carried out with modifications within a range conforming to the gist described above and/or below, all of which are included in the technical scope of the present invention.

Experimental Example 1

Hereinafter, the first embodiment of the present invention will be described. The test methods are described below.

(1) Basis Weight

Three test pieces with a diameter of 72 mm were taken, and the weight of each of the test piece was measured. The measured values were then converted to values per unit area, and an arithmetic mean value of the converted values was calculated and rounded to the nearest whole number to obtain the basis weight.

(2) Average Fiber Diameter

Five arbitrary points on the sheet sample were selected, and the diameter of a single fiber was measured at each point with n = 20 per point using an electron microspcope. The average fiber diameter was determined by calculating the arithmetic mean value.

(3) Productivity

Three sheet samples with dimensions of 10 cm in length and 30 cm in width, were taken, and the surfaces of the samples were visually inspected to check for defects. A sample with one or more defects, such as a mass of non-fibrous resin, was classified as "having bad productivity" (unacceptable), and a sample without such defects was classified as "having good productivity" (acceptable).

<Example 1-1>

As raw materials, a mixture of 50% by mass of a plant-derived high-density polyethylene resin (degree of biomass: 90% or more) with a melt flow rate (MFR) of 20 g/10min (catalog value), 47% by mass of a petroleum-derived polypropylene resin with an MFR of 60 g/10min (catalog value), with the addition of 3% by mass of DYNARON (registered trademark) 6200P, a compatibilizer manufactured by JSR Corporation, was used. This mixture was subjected to melt spinning at a molten resin temperature (the temperature of the resin actually melted) of 290°C using a meltblown equipment to form a fiber sheet (a meltblown nonwoven fabric) having a basis weight of 38 g/m$^2$.

The degree of biomass as used herein refers to the amount of plant-derived raw materials used and is determined by measuring the amount of $^{14}$C.

<Example 1-2>

A fiber sheet of Example 1-2 (meltblown nonwoven fabric) with a basis weight of 38g/m$^2$ was obtained in the same manner as Example 1-1 except that a mixture of 70% by mass of the plant-derived high-density polyethylene resin (degree of biomass: 90% or more) with an MFR of 20 g/10min, 27% by mass of a petroleum-derived polypropylene resin with an MFR of 60 g/10min, and 3% by mass of DYNARON (registered trademark) 6200P, a compatibilizer manufactured by JSR Corporation, was used as raw materials.

<Comparative Example 1-1>

An attempt was made to obtain a fiber sheet of Comparative Example 1-1 in the same manner as in Example, except that only the plant-derived high-density polyethylene resin with an MFR of 20 g/10min was used as a raw material. However, a sheet could not be obtained due to excessive fusion between the fibers.

<Comparative Example 1-2>

An attempt was made to obtain a fiber sheet of Comparative Example 1-2 in the same manner as in Example 1-1, except that a mixture of 97% by mass of the plant-derived high-density polyethylene resin (degree of biomass: 90% or more) with an MFR of 20 g/10min and 3% by mass of DYNARON (registered trademark) 6200P, a compatibilizer manufactured by JSR Corporation, was used as raw materials. However, a sheet could not be obtained due to excessive fusion between the fibers.

<Comparative Example 1-3>

A fiber sheet of Comparative Example 1-3 with a basis weight of 38 $g/m^2$ was obtained in the same manner as in Example 1-1 except that a mixture of 50% by mass of the plant-derived high-density polyethylene resin (degree of biomass: 90% or more) with an MFR of 20 g/10min and 50% by mass of the petroleum-derived polypropylene resin with an MFR of 60 g/10min was used as raw materials.

<Comparative Example 1-4>

A fiber sheet of Comparative 1-4 with a basis weight of 38 $g/m^2$ was obtained in the same manner as in Example 1-1, except that a mixture of 70% by mass of the plant-derived high-density polyethylene resin (degree of biomass: 90% or more) with an MFR of 20 g/10min and 30% by mass of Hi-WAX 200P (polyethylene wax, manufactured by Mitsui Chemicals) was used as raw materials.

The blend ratios of the raw materials and the characteristics of the resulting fiber sheets of Examples 1-1 and 1-2, and Comparative Examples 1-1 to 1-4 are shown in Table 1.

[Table 1]

| | | Example 1-1 | Example 1-2 | Comparative Example 1-1 | Comparative Example 1-2 | Comparative Example 1-3 | Comparative Example 1-4 |
|---|---|---|---|---|---|---|---|
| **Blend** | Plant-derived polyethylene resin [% by mass] | 50 | 70 | 100 | 97 | 50 | 70 |
| | Polypropylene resin [% by mass] | 47 | 27 | 0 | 0 | 50 | 0 |
| | Compatibilizer [% by mass] | 3 | 3 | 0 | 3 | 0 | 0 |
| | Polyethylene wax [% by mass] | 0 | 0 | 0 | 0 | 0 | 30 |
| Characteristics | Basis weight [g/m²] | 38 | 38 | - | - | 38 | 38 |
| | Average fiber diameter [μm] | 3.84 | 5.32 | - | - | 7.24 | 21.89 |
| | Productivity | **Good** | **Good** | - | - | Bad | **Good** |

According Table 1, the fiber sheets of Examples 1-1 and 1-2 exhibited superior productivity and finer denier compared to the cases of Comparative Examples 1-1 to 1-4. Sheets (nonwoven fabrics) were not obtained in Comparative Examples 1-1 and 1-2. In Comparative Example 1-3, the absence of a compatibilizer resulted in the generation of a large amount of resin beads, which adhered to the vicinity of the nozzle. This is considered to have prevented the achievement of fine denier and caused defects in the fiber sheet. In Comparative Example 1-4, the use of the polyethylene wax is considered to have increased the overall viscosity, preventing the achievement of fine denier.

The second embodiment of the present invention will be described with Experimental Example 2 and the subsequent descriptions. The test methods are described below.

(1) Ventilation Resistance

A sample punched into 72 mm φ disc was mounted on an adapter having an effective ventilation diameter of 50 mm φ. Pipes each having an inner diameter of 50 mm, connected to a microdifferential pressure gauge, were connected together from the top and the bottom of the sample. Subsequently, airflow was applied through the sample in the thickness direction at a wind speed of 10 cm/s, and the pressure difference across the sample in the unthrottled state was measured as the ventilation resistance (pressure loss).

(2) Particle Collection Efficiency · Particle Penetration Rate

A sample punched into 72 mm φ disc was mounted on an adapter having an effective ventilation diameter of 50 mm φ. Subsequently, airflow was applied through the sample in the thickness direction at a wind speed of 10 cm/s. The particle collection efficiency was measured using a light scattering airborne particle counter KC-01E manufactured by RION CO., LTD. according to the following method.

Evaluation particles: Atmospheric dust particles
Wind speed: 10 cm/s Particle collection efficiency [%] = (1 - (number concentration of particles with a particle size of 0.3 μm to 0.5 μm after passing through the sample/number concentration of particles with a particle size of 0.3 μm to 0.5 μm before passing through the sample)) × 100 Particle penetration rate = (number concentration of particles with a particle size of 0.3 μm to 0.5 μm after passing through the sample/number concentration of particles with a particle size of 0.3 μm to 0.5 μm before passing through the sample)

(3) Filter Material Quality Factor (QF)

The QF value was determined using the ventilation resistance measured in the above (1) and the particle collection efficiency measured in the above (2) according to the following formula.

QF [mmAq$^{-1}$] = -[ln(1 - (particle collection efficiency (%)/100))]/[ventilation resistance (mmAq)]

(4) Basis Weight

The basis weight was determined under the same conditions as in Experimental Example 1.

(5) Average Fiber Diameter

The average fiber diameter was determined under the same conditions as in Experimental Example 1.

(6) Productivity

The productivity was evaluated under the same conditions as in Experimental Example 1.

<Example 2-1>

As raw materials, a mixture of 50% by mass of the plant-derived high-density polyethylene resin (degree of biomass: 90% or more) with a melt flow rate (MFR) of 20 g/10min (catalog value), 46% by mass of the petroleum-derived polypropylene resin with an MFR of 60 g/10min (catalog value), with the addition of 3% by mass of DYNARON (registered trademark) 6200P, a compatibilizer manufactured by JSR Corporation, and 1% by mass of Chimassorb (registered trademark) 944 manufactured by BASF Japan Ltd., a hindered-amine-based compound as a nitrogen-containing compound, was used. This mixture was subjected to the melt spinning at a molten resin temperature (the temperature of the resin actually melted) of 290°C using a meltblown equipment to form a fiber sheet having a basis weight of 38 g/m$^2$. The obtained fiber sheet was imparted with an electric charge by passing water with an electric conductivity of 0.7 μS/cm and a pH of 6.8 from the front surface to the back surface of the fiber sheet, followed by air drying at 25°C to obtain an electret sheet. The filter characteristics were evaluated based on the ventilation resistance and the particle penetration rate.

<Example 2-2>

An electret sheet of Example 2 was produced in the same manner as in Example 2-1, except that a mixture of 70% by mass of the plant-derived high-density polyethylene resin (degree of biomass: 90% or more) with an MFR of 20 g/10min, 26% by mass of the petroleum-derived polypropylene resin with an MFR of 60 g/10min, with the addition of 3% by mass of DYNARON (registered trademark) 6200P manufactured by JSR Corporation and 1% by mass of Chimassorb (registered trademark) 944 manufactured by BASF Japan Ltd. was used as raw materials.

<Comparative Example 2-1>

An electret sheet of Comparative Example 2-1 was produced in the same manner as Example 2-1, except that a mixture of 50% by mass of the plant-derived high-density polyethylene resin (degree of biomass: 90% or more) with an MFR of 20 g/10min, 49% by mass of the petroleum-derived polypropylene resin with an MFR of 60 g/10min, with the addition of 1% by mass of Chimassorb (registered trademark) 944 manufactured by BASF Japan Ltd. was used as raw materials.

<Comparative Example 2-2>

An electret sheet of Comparative Example 2-2 was produced in the same manner as Example 2-1, except that a mixture of 70% by mass of the plant-derived high-density polyethylene resin (degree of biomass: 90% or more) with an MFR of 20 g/10min, 29% by mass of the petroleum-derived polypropylene resin with an MFR of 60 g/10min, with the addition of 1% by mass of Chimassorb (registered trademark) 944 manufactured by BASF Japan Ltd. was used as raw materials.

<Comparative Example 2-3>

An attempt was made to obtain a sheet of Comparative Example 2-3 in the same manner as in Example 2-1, except that a mixture of 96% by mass of the plant-derived high-density polyethylene resin (degree of biomass: 90% or more) with an MFR of 20 g/10min, with the addition of 3% by mass of DYNARON (registered trademark) 6200P manufactured by JSR Corporation and 1% by mass of Chimassorb (registered trademark) 944 manufactured by BASF Japan Ltd. was used as raw materials. However, a sheet could not be obtained due to excessive fusion between the fibers.

<Comparative Example 2-4>

An electret sheet of Comparative Example 2-4 was produced in the same manner as Example 2-1, except that a mixture of 96% by mass of a petroleum-derived high-density polypropylene resin with an MFR of 40 g/10min, with the addition of 1% by mass of Chimassorb (registered trademark) 944 manufactured by BASF Japan Ltd., was used as raw materials.

The blend ratios of the raw materials and the characteristics of the resulting fiber sheets of Examples 2-1 and 2-2, and Comparative Examples 2-1 to 2-4 are shown in Table 2.

[Table 2]

| | | Example 2-1 | Example 2-2 | Comparative Example 2-1 | Comparative Example 2-2 | Comparative Example 2-3 | Comparative Example 2-4 |
|---|---|---|---|---|---|---|---|
| Blend | Plant-derived polyethylene resin [% by mass] | 50 | 70 | 50 | 70 | 96 | 0 |
| | Petroleum-derived polyethylene resin [% by mass] | 0 | 0 | 0 | 0 | 0 | 99 |
| | Polypropylene resin [% by mass] | 46 | 26 | 49 | 29 | 0 | 0 |
| | Compatibilizer [% by mass] | 3 | 3 | 0 | 0 | 3 | 0 |
| | Nitrogen-containing compound [% by mass] | 1 | 1 | 1 | 1 | 1 | 1 |
| Characteristics | Basis weight [g/m$^2$] | 38 | 38 | 38 | 38 | 38 | 38 |
| | Ventilation resistance [mmAq] | 1.50 | 1.05 | 0.91 | 0.7 | - | 0.38 |
| | Particle collection efficiency [%] | 96.2 | 92.4 | 93.9 | 89.8 | - | 51.8 |
| | Filter material quality factor (QF) [mmAq$^{-1}$] | 2.18 | 2.46 | 3.10 | 3.11 | - | 1.92 |
| | **Average fiber diameter [$\mu$m]** | 3.84 | 5.32 | 7.24 | 9.00 | - | 19.10 |
| | Productivity | Good | Good | Bad | Bad | - | Good |

EP 4 582 477 A1

18

According to Table 2, the electret sheets of Examples 2-1 and 2-2 exhibited superior productivity, and the electret filters of Examples 2-1 and 2-2 achieved higher particle collection efficiency, i.e., higher electret performance compared to the cases of Comparative Examples 2-1 to 2-4.

Experimental Example 3

Hereinafter, the third embodiment of the present invention will be described. The test methods are described below.

(1) Ventilation Resistance

The ventilation resistance was measured under the same conditions as in Experimental Example 2.

(2) Particle Collection Efficiency · Particle Penetration Rate

The particle collection efficiency and the particle penetration rate were determined under the same conditions as in Experimental Example 2.

(3) Filter Material Quality Factor (QF)

The filter material quality factor (QF) was determined under the same conditions as in Experimental Example 2.

(4) Basis Weight

The basis weight was determined under the same conditions as in Experimental Example 1.

(5) Average Fiber Diameter

The average fiber diameter was determined under the same conditions as in Experimental Example 1.

(6) Electric Charge Stability

The sample used in the above (2) was wrapped in aluminum foil and then placed in a dryer set at 100°C for 30 minutes. Subsequently, the particle penetration rate was calculated in the same manner as in (2) and the QF value was determined in the same manner as in (3). The performance retention rate was obtained by dividing the resulting QF value by the QF value obtained in (3).

<Example 3-1>

As raw materials, a mixture of 50% by mass of the plant-derived high-density polyethylene resin (degree of biomass: 90% or more) with a melt flow rate (MFR) of 20 g/10min (catalog value) and 45.925% by mass of the petroleum-derived polypropylene resin with an MFR of 60 g/10min (catalog value), with the addition of 3% by mass of DYNARON (registered trademark) 6200P (a compatibilizer) manufactured by JSR Corporation, 1% by mass of Chimassorb (registered trademark) 944, a hindered-amine-based compound (a nitrogen-containing compound) manufactured by BASF Japan Ltd., and 0.075% by mass of magnesium stearate (a metal salt of a fatty acid), was used. The mixture was subjected to the melt spinning at a molten resin temperature (the temperature of the resin actually melted) of 290°C using a meltblown equipment to obtain a fiber sheet having a basis weight of 38 g/m². The obtained fiber sheet was then imparted with an electric charge by passing water with an electric conductivity of 0.7 μS/cm and a pH of 6.8 from the front surface to the back surface of the fiber sheet, followed by air drying at 25°C to obtain an electret sheet. The filter characteristics were evaluated based on the ventilation resistance and the particle penetration rate.

<Example 3-2>

An electret sheet of Example 3-2 was produced in the same manner as in Example 3-1, except that a mixture of 70% by mass of the plant-derived high-density polyethylene resin (degree of biomass: 90% or more) with an MFR of 20 g/10min, 25.925% by mass of the petroleum-derived polypropylene resin with an MFR of 60 g/10min, with the addition of 3% by mass of DYNARON (registered trademark) 6200P (a compatibilizer) manufactured by JSR Corporation, 1% by mass of Chimassorb (registered trademark) 944 (a nitrogen-containing compound) manufactured by BASF Japan Ltd.,

and 0.075% by mass of magnesium stearate (a metal salt of a fatty acid) was used as raw materials.

<Comparative Example 3-1>

An electret sheet of Comparative Example 3-1 was produced in the same manner as in Example 3-1 except that a mixture of 50% by mass of the plant-derived high-density polyethylene resin (degree of biomass: 90% or more) with an MFR of 20 g/10min, 46% by mass of the petroleum-derived polypropylene resin with an MFR of 60 g/10min, with the addition of 3% by mass of DYNARON (registered trademark) 6200P manufactured by JSR Corporation and 1% by mass of Chimassorb (registered trademark) 944 manufactured by BASF Japan Ltd. was used as raw materials. In Comparative Example 3-1, the metal salt of a fatty acid was not added.

<Comparative Example 3-2>

An electret sheet of Comparative Example 3-2 was produced in the same manner as in Example 3-1 except that a mixture of 70% by mass of the plant-derived high-density polyethylene resin (degree of biomass: 90% or more) with an MFR of 20 g/10min and 26% by mass of the petroleum-derived polypropylene resin with an MFR of 60 g/10min, with the addition of 3% by mass of DYNARON (registered trademark) 6200P (a compatibilizer) manufactured by JSR Corporation and 1% by mass of Chimassorb (registered trademark) 944 (a nitrogen-containing compound) manufactured by BASF Japan Ltd. was used as raw materials. In Comparative Example 3-2, the metal salt of a fatty acid was not added.

<Comparative Example 3-3>

An attempt was made to obtain a sheet of Comparative Example 3-3 in the same manner as in Example 3-1 except that a mixture of 98.925% by mass of the plant-derived high-density polyethylene resin (degree of biomass: 90% or more) with an MFR of 20 g/10min, with the addition of 1% by mass of Chimassorb (registered trademark) 944 (a nitrogen-containing compound) manufactured by BASF Japan Ltd. and 0.075% by mass of magnesium stearate (a metal salt of a fatty acid) was used as raw materials. However, a sheet was not obtained due to excessive fusion between the fibers. In Comparative Example 3-3, the compatibilizer was not added.

<Comparative Example 3-4>

An electret sheet of Comparative Example 3-4 was produced in the same manner as in Example 3-1, except that a mixture of 98.925% by mass of the petroleum-derived high-density polyethylene resin with an MFR of 40 g/10min, with the addition of 1% by mass of Chimassorb (registered trademark) 944 (a nitrogen-containing compound) manufactured by BASF Japan Ltd. and 0.075% by mass of magnesium stearate (a metal salt of a fatty acid) was used as raw materials. In Comparative Example 3-4, the compatibilizer was not added.

<Comparative Example 3-5>

An electret sheet of Comparative Example 3-5 was produced in the same manner as Example 3-1 except that a mixture of 99% by mass of the petroleum-derived high-density polyethylene resin with an MFR of 40 g/10min, with the addition of 1% by mass of Chimassorb (registered trademark) 944 (a nitrogen-containing compound) manufactured by BASF Japan Ltd. was used as raw materials. In Comparative Example 3-5, neither the compatibilizer nor the metal salt of a fatty acid was not added.

The blend ratios of the raw materials and the characteristics of the resulting electret sheets of Examples 3-1 and 3-2, and Comparative Examples 3-1 to 3-5 are shown in Table 3.

[Table 3]

| | | Example 3-1 | Example 3-2 | Comparative Example 3-1 | Comparative Example 3-2 | Comparative Example 3-3 | Comparative Example 3-4 | Comparative Example 3-5 |
|---|---|---|---|---|---|---|---|---|
| Blend | Plant-derived polyethylene resin [% by mass] | 50 | 70 | 50 | 70 | 98.925 | 0 | 0 |
| | Petroleum-derived polyethylene resin [% by mass] | 0 | 0 | 0 | 0 | 0 | 98.925 | 99 |
| | Polypropylene resin [% by mass] | 45.925 | 25.925 | 46 | 26 | 0 | 0 | 0 |
| | Compatibilizer [% by mass] | 3 | 3 | 3 | 3 | 0 | 0 | 0 |
| | Nitrogen-containing compound [% by mass] | 1 | 1 | 1 | 1 | 1 | 1 | 1 |
| | Metal salt of a fatty acid [% by mass] | 0.075 | 0.075 | 0 | 0 | 0.075 | 0.075 | 0 |
| Characteristics | Basis weight [g/m$^2$] | 38 | 38 | 38 | 38 | 38 | 38 | 38 |
| | Ventilation resistance [mmAq] | 1.50 | 1.05 | 1.35 | 0.98 | - | 0.44 | 0.38 |
| | Particle collection efficiency [%] | 96.2 | 92.4 | 95.3 | 90.1 | - | 60.4 | 51.8 |
| | Filter material quality factor (QF) [mmAq$^{-1}$] | 2.18 | 2.46 | 2.26 | 2.36 | - | 2.26 | 1.92 |
| | **Average fiber diameter [$\mu$m]** | 3.84 | 5.32 | 4.87 | 7.16 | - | 12.2 | 19.1 |
| | Electric charge stability | 0.82 | 0.79 | 0.58 | 0.53 | - | 0.64 | 0.16 |

According to Table 3, the electret filters of Examples 3-1 and 3-2 exhibited superior electric charge stability and a lower environmental impact compared to the cases of Comparative Examples 3-1 to 3-5.

INDUSTRIAL APPLICABILITY

The meltblown nonwoven fabric of the present invention, with its fine fiber diameter and a good texture, exhibits a low environmental impact and is therefore suitable for use as a material in various applications, including hygiene products and daily necessities, thus contributing significantly to relevant industries. However, the scope of its applications is not limited thereto.

The electret material of a preferred embodiment of the present invention (the second embodiment) exhibits excellent electret performance and a low environmental impact, and is therefore suitable for use in filter applications such as dustproof clothing, dust masks, and filters for air cleaners, thus contributing significantly to relevant industries. However, the scope of its applications is not limited thereto.

The electret material of another preferred embodiment of the present invention (the third embodiment) exhibits excellent electric charge stability, thereby contributing to longer product lifespan. In addition, the electret material has a low environmental impact. Accordingly, the electret material is suitable for use in filter applications such as dustproof clothing, dust masks, and filters for air cleaners, thus contributing significantly to relevant industries. However, the scope of its applications is not limited thereto.

**Claims**

1. A resin composition comprising:

   a polyethylene resin;
   a polypropylene resin; and
   a compatibilizer,
   wherein the polyethylene resin contains a plant-derived polyethylene resin.

2. The resin composition according to claim 1, further comprising a nitrogen-containing compound.

3. The resin composition according to claim 1, further comprising a nitrogen-containing compound and a metal salt of a fatty acid.

4. The resin composition according to any one of claims 1 to 3, wherein the resin composition comprises the compatibilizer in an amount of from 0.1% by mass to 20% by mass based on 100% by mass of the resin composition.

5. The resin composition according to claim 2, wherein the resin composition comprises the nitrogen-containing compound in an amount of from 0.1% by mass to 5% by mass based on 100% by mass of the resin composition.

6. The resin composition according to claim 3, wherein the resin composition comprises the nitrogen-containing compound in an amount of from 0.1% by mass to 5% by mass, and the metal salt of a fatty acid in an amount of from 0.01% by mass to 1% by mass, based on 100% by mass of the resin composition.

7. The resin composition according to any one of claims 1 to 3, wherein the resin composition comprises the polyethylene resin in an amount of from 10% by mass to 98% by mass based on 100% by mass of the resin composition.

8. The resin composition according to any one of claims 1 to 3, wherein the compatibilizer is present in at least one of the polyethylene resin or the polypropylene resin.

9. The resin composition according to claim 2 or 3, wherein the nitrogen-containing compound contains a hindered-amine-based compound.

10. A meltblown nonwoven fabric formed from the resin composition according to claim 1.

11. The meltblown nonwoven fabric according to claim 10, wherein the meltblown nonwoven fabric includes fibers having an average fiber diameter of 8 μm or less.

12. An electret material formed from the resin composition according to claim 2 or 3.

13. The electret material according to claim 12, wherein the electret material is in a form of a sheet product.

14. The electret material according to claim 13, wherein the sheet product is a meltblown nonwoven fabric or a spunbond nonwoven fabric.

15. The electret material according to claim 14, wherein the electret material is imparted with an electric charge by a liquid contact charging method.

16. An electret filter comprising the electret material according to claim 14.

17. A filter material comprising the electret filter according to claim 16,

wherein the filter material has a performance retention rate of 0.75 or more, the performance retention rate being determined by dividing a value of filter material quality factor (QF) after application of a heat load of 100°C to the filter material by a value of filter material quality factor (QF) before application of the heat load of 100°C to the filter material,

wherein the filter material quality factor (QF) is defined by the following formula.

$$QF \ [mmAq^{-1}] = -[\ln(1 - (particle\ collection\ efficiency\ (\%)/100))]/[ventilation\ resistance\ (mmAq)]$$

18. A method for producing an electret material, comprising:
melt mixing a polyethylene resin at least partially containing a plant-derived polyethylene resin, a polypropylene resin, a compatibilizer, and a nitrogen-containing compound.

19. A method for producing an electret material, comprising:
melt mixing a polyethylene resin at least partially containing a plant-derived polyethylene resin, a polypropylene resin, a compatibilizer, a nitrogen-containing compound, and a metal salt of a fatty acid.

# EP 4 582 477 A1

## INTERNATIONAL SEARCH REPORT

International application No.

**PCT/JP2023/030656**

### A. CLASSIFICATION OF SUBJECT MATTER

***C08L 23/00***(2006.01)i; ***B01D 39/14***(2006.01)i; ***B01D 39/16***(2006.01)i; ***B03C 3/28***(2006.01)i; ***D01F 6/04***(2006.01)i; ***D04H 3/007***(2012.01)i; ***D04H 3/16***(2006.01)i

FI: C08L23/00; D04H3/16; D04H3/007; B01D39/16 A; B03C3/28; B01D39/14 E; D01F6/04 Z

According to International Patent Classification (IPC) or to both national classification and IPC

### B. FIELDS SEARCHED

Minimum documentation searched (classification system followed by classification symbols)

C08L23; B01D39; B03C3; D01F6; D04H3

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | 佐藤嘉洋ほか, PP/PE繊維の耐摩耗性の評価, あいち産業化学技術総合センター 研究報告, 2017, pp. 100-103, https://www.aichi-inst.jp/mikawa/research/report/06-p100-ms03.pdf, (SATO, Yoshihiro et al. The Evaluation of the Abrasion Resistance of PP/PE Fiber. Aichi Center for Industry and Science Technology Research Report.) pp. 100-102 | 1-19 |
| Y | JP 2018-199886 A (TORAY IND., INC.) 20 December 2018 (2018-12-20) claims, paragraph [0062], examples | 1-19 |
| Y | JP 2008-221074 A (TOYOBO CO., LTD.) 25 September 2008 (2008-09-25) claims, paragraphs [0015], [0058] | 2, 3, 5-9, 12-19 |
| Y | JP 2022-34381 A (TOYOBO CO., LTD.) 03 March 2022 (2022-03-03) claims, paragraphs [0028], [0031] | 2, 3, 5-9, 12-19 |
| Y | JP 2007-92242 A (JAPAN VILENE CO., LTD.) 12 April 2007 (2007-04-12) claims, paragraph [0012] | 2, 3, 5-9, 17-19 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 October 2023** | **07 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

24

**EP 4 582 477 A1**

**INTERNATIONAL SEARCH REPORT**

International application No.

**PCT/JP2023/030656**

## C. DOCUMENTS CONSIDERED TO BE RELEVANT

| Category* | Citation of document, with indication, where appropriate, of the relevant passages | Relevant to claim No. |
|---|---|---|
| Y | JP 63-123414 A (TOYOBO CO., LTD.) 27 May 1988 (1988-05-27) claims, page 2, lower right column | 2, 3, 5-9, 17-19 |
| A | JP 2018-95973 A (TORAY IND., INC.) 21 June 2018 (2018-06-21) entire text | 1-19 |

Form PCT/ISA/210 (second sheet) (January 2015)

25

## INTERNATIONAL SEARCH REPORT
### Information on patent family members

International application No.

**PCT/JP2023/030656**

| Patent document cited in search report | | | Publication date (day/month/year) | Patent family member(s) | Publication date (day/month/year) |
|---|---|---|---|---|---|
| JP | 2018-199886 | A | 20 December 2018 | (Family: none) | |
| JP | 2008-221074 | A | 25 September 2008 | (Family: none) | |
| JP | 2022-34381 | A | 03 March 2022 | (Family: none) | |
| JP | 2007-92242 | A | 12 April 2007 | (Family: none) | |
| JP | 63-123414 | A | 27 May 1988 | (Family: none) | |
| JP | 2018-95973 | A | 21 June 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3995885 B
- JP 2018052120 A
- JP H10308326 A
- JP 2011506628 A
- JP 2022138525 A
- JP 2022138526 A
- JP 2022138527 A

**Non-patent literature cited in the description**

- Compatibilizer for polymers. CMC Publishing Co., Ltd.